(19) Europäisches Patentamt
European Patent Office
Office européen des brevets

(11) EP 0 496 015 B1

(12) **EUROPEAN PATENT SPECIFICATION**

(45) Date of publication and mention of the grant of the patent:
**29.05.1996 Bulletin 1996/22**

(51) Int. Cl.[6]: **B29C 44/04**, B29C 44/18

(21) Application number: **91100766.4**

(22) Date of filing: **22.01.1991**

# (54) Process of production of foamed articles of olefin resins and apparatus therefor

Verfahren und Vorrichtung zur Herstellung von geschäumten Werkstücken aus Olefinharzen

Procédé et dispositif pour la fabrication de produits cellulaires en résine oléfinique

(84) Designated Contracting States:
**BE DE FR GB**

(43) Date of publication of application:
**29.07.1992 Bulletin 1992/31**

(73) Proprietor: **KANEGAFUCHI KAGAKU KOGYO KABUSHIKI KAISHA**
**Kita-ku Osaka-shi (JP)**

(72) Inventors:
- **Fukasawa, Yukio**
  **Settsu-shi, Osaka-fu (JP)**
- **Fukui, Hisatoshi**
  **Toyonaka-shi, Osaka-fu (JP)**

(74) Representative: **VOSSIUS & PARTNER**
**Postfach 86 07 67**
**81634 München (DE)**

(56) References cited:
**EP-A- 0 153 706**
**EP-A- 0 192 054**
**DE-A- 3 711 028**
**JP-A- 3 053 929**
**US-A- 4 615 849**

- **DERWENT PUBLICATIONS LTD. an 87-222249, 8732 & JP-A-62 179 927 (ERLENBACH)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 496 015 B1

Printed by Rank Xerox (UK) Business Services
2.11.7/3.4

## Description

The present invention relates to a process for production of foamed articles of olefin resins, particularly relates to a process for production of foamed articles of olefin resins which comprises compressively filling pre-expanded beads of olefin resins in a metal mold and subjecting to expansion molding to produce energy absorbing materials such as core materials for automobile bumpers or shock absorbing packaging materials, etc. having constant weight and little variation in the properties thereof.

In the art of production of formed articles in a mold using pre-expanded beads of olefin resins such as polypropylene, polyethylen, etc., a process is well known which comprises compressively filling said pre-expanded beads in a metal mold, thermally fusing the beads with steam and cooling the fused beads to prepare foamed articles in the shape of the mold.

As Prior art of such molding processes, there are known processes as described in JP-B-33996/1978, US-A-3,504,168 or JP-A-179927/1987.

These processes comprise compressing pre-expanded beads with compressed air, filling said beads in the compressed state, then, in the subsequent heating step, thermally fusing said beads with use of expanding force of the pre-expanded beads to prepare foamed articles having significantly smaller shrinkability than those prepared when said beads are filled into the mold in a non-compressed state. However, none of the references of the prior art definitely describe how the weight of the pre-expanded beads to be compressed in the mold is maintained at a constant level (namely, how the expansion degree of the foamed articles after expansion molding is maintained at a constant level), but it is only presumed that, if the compressing pressure of the pre-expanded beads is kept constant, the expansion degree of the resultant foamed articles will become constant to some extent.

However, under the conditions conventionally used in industrial practice, the weight of the pre-expanded beads filled into a metal mold can not be kept constant even if the set value of the compressing pressure is maintained at a constant level, but the expansion degree of the resultant foamed articles is varied widely. Therefore, the weight of formed articles has been controlled by a manual operation of a compressing pressure control valve of the molding apparatus practiced by a skilled operator who obtained information of the weight of the molded articles immediately after the molding and the weight after drying. However, it is impossible to conduct such a valve control at every shot of molding. Therefore, at present, the control of variation of the weight of products is limited to a certain degree thus undesired effects to the yield and the quality of the products are caused. Especially, in applications wherein the foamed articles serve as an absorber of energy generated by collision like core materials of automobile bumpers, a wide variation in the expansion degree causes a significant difference in the function of the products which necessitate excessive safety design against collision accidents.

As discussed above, when producing foamed articles by compressively filling pre-expanded beads of olefin resins in a mold, an expansion molding process which is industrially usable and which provides a product with a narrow variation of the expansion degree and with a high production yield, especially if the standarized range of the expansion degree of the product is made narrower than that conventionally used has not yet been described.

US-A-4 615 849 discloses a method and device for sintering differing molded plastic parts in a short processing time. A mold cavity is provided with various sensors of molding conditions such as temperature, pressure density, etc.; the measured values are compared with given values stored in a control means and the molding conditions are changed during the molding.

It is an object of the present invention to provide a method of production of foamed articles of olefin resins which are made constant in weight and narrow in the variation of the quality by compressively filling pre-expanded beads of olefin resins in a mold and expansion molding by heating.

It is another object of the present invention to provide an apparatus usable for the above mentioned process.

Other objects and advantages of the present invention will be made apparent from the following detailed description to those skilled in the art.

The present invention is based on the observation that an important relation exists between the temperature or apparent density of the pre-expanded beads before compressive filling and the pressure during the compressive filling.

That is, the inventors have found, that the weight of the pre-expanded beads filled into the metal mold widely varies if the temperature of the beads varies, even if the compressing pressure is kept at the same level.

Moreover, due to the restriction in the production of pre-expanded beads, it is difficult to achieve the foaming of all of the pre-expanded beads with the same expansion degree, thus they give generally a mixture of particles having a range of distribution of the expansion degree, comprising the desired foaming degree in the middle thereof. With regard to such pre-expanded beads, an allowable range of apparent density should be inevitably permitted at the expansion molding stage.

Furthermore, it has been found that a definite volume of the pre-expanded beads taken out just before the pre-expanded beads are compressed into the mold, has not always a constant weight.

The present invention provides a process of production of foamed articles of olefin resins having little weight variation by permitting the weight of the pre-expanded beads compressed into a mold to be kept at the same level.

The invention is described in detail in connection with the drawings in which

Fig. 1 is a graph showing the relation between the temperature of pre-expanded beads and the compressing pressure in Experiment 1.
Fig. 2 is a graph showing the relation between apparent density of pre-expanded beads and the compressing pressure in the same Experiment 1.
Fig. 3 is a schematic illustration of an example of a compression filling apparatus usable in praticing the process of the present invention.

In a process of production of foamed articles of olefin resins which comprises compressively filling pre-expanded beads in a metal mold and subjecting said beads to expansion molding, the present invention relates to,

firstly a filling process characterized in that the temperature of said pre-expanded beads to be compressed is measured before starting said compressive filling to determine the compressing pressure adapted to said temperature,

secondly, a process for keeping said pre-expanded beads at a definite temperature previously to be compressed,

thirdly, a filling process which comprises measuring the apparent density of said pre-expanded beads to be compressed before starting said compressive filling to determine the compressing pressure adapted to said apparent density, and

fourthly, a filling process which comprises measuring both temperature and the apparent density of said pre-expanded beads before starting said compressive filling to determine the compressing pressure adapted to said temperature and apparent density.

By adapting these processes, the weight of the pre-expanded beads filled into the metal mold is maintained at a constant level to decrease the variation of the eight of the resulting foamed articles.

An apparatus, adapted for practicing the foregoing process of the present invention, comprises a raw material silo, a subhopper, a compressive filling container and a metal mold, wherein the pre-expanded beads are transported from the raw material silo through said subhopper, then compressively filled into said metal mold and subjected to the expansion molding to produce foamed articles. The present invention is characterized in that the apparatus is provided with a temperature sensor attached to said silo or subhopper, a bypass line arranged between the subhopper and the compressive filling container, said bypass line being provided with a measuring device of apparent density, a pressure escape valve attached to said metal mold for maintaining the compressive filling pressure within said compressive filling container and said metal mold connected therewith at a constant level, and a computer and pressure control device which transmits temperature information via said temperature sensor and weight information via said aparent density measuring device to calculate and automatically set a limit pressure value for said pressure escape valve based on said information.

Examples of the olefin resins usable in the present invention are polypropylenes, random- or block-copolymers, of propylene and ethylene, terpolymers of propylene, ethylene and butene, low density polyethylenes, linear low density polyethylenes, medium density polyethylenes, high density polyethylenes, ethylene-vinyl acetate copolymers, copolymers of ethylene and acrylic acid or metal acrylates, polybut-1-enes , and poly-4-methylpentenes, etc., but are not limited thereto.

These resins nay be used alone or in combination of two or more. Said resins may further contain inorganic or organic fillers.

Among said olefin resins, crosslinked or non-crosslinked propylene-ethylene copolymers and polyethylene resins are preferred.

The process for producing pre-expanded beads of olefin resins usable in the present invention is not limited specifically but any process may be used for producing said pre-expanded beads.

Examples are (a) pre-expanded beads produced by dispersing a volatile blowing agent, olefin resin beads and a dispersing agent with water in a pressure container, adjusting the dispersion to a specified temperature and pressure, then discharging the olefin resin beads and water into a low pressure area, (b) pre-expanded beads produced by impregnating olefin resin beads with a volatile blowing agent or an inorganic gas and heating said beads with steam in a pressure container, and (c) pre-expanded beads produced by kneading an olefin resin and a blowing agent in an extruder, cooling said mixture, extruding said cooled mixture from a multi-hole die provided at the head of the extruder to form extruded foamed strands and cutting the strands to a proper length with a cutter. Any pre-expanded beads produced by these methods can be used in the present invention. For use as core materials for bumper or shock absorbing packing materials, the expansion degree of foamed articles is firstly determined corresponding to the field of use and then pre-expanded beads having an adaptable apparent density are selected therefor. However, those pre-expanded beads prepared by the above methods, unless specially prepared, are not uniform in the expansion degree but they are a mixture of beads having a range of distribution of the expansion degree. It is difficult to prepare pre-expanded beads always having the same apparent density. Accordingly, a certain variation of apparent density is normally allowed in raw materials for expansion molding.

The pre-expanded beads of olefin resins usable in the present invention also have a range of distribution of the expansion degree and an allowed range of the apparent density.

It is most preferred to determine the temperature of the pre-expanded beads by measuring the temperature of the base resin forming pre-expanded beads but, in practice, it is difficult to measure this temperature. Therefore, in the present invention, the temperature of pre-expanded beads is determined by measuring the atmospheric temperature within the pre-expanded beads at an area where the beads are staying for relatively long period of time, since the temperature is presumed to be most close to that of the base resin.

In practice, the temperature is that of the thermostatic laboratory or that at the lower part of the silo for raw materials as described below.

In the process of production of foamed articles as described above, the compressive filling pressure is properly controlled corresponding to the temperature or the apparent density of the pre-expanded beads to thus obtain a constant level of the expansion degree of the foamed articles, in such way that, the compressive filling pressure is set at a low level when the temperature or the apparent density of the pre-expanded beads to be compressed is high, and contrarily, that the compressive filling pressure is set at a high level when the temperature or the apparent density of the pre-expanded beads is low.

Thus, foamed articles having an expansion degree of decreased variation and having improved qualities can be obtained.

Hereinafter, the present invention will be described in more detail by way of a preferred embodiment.

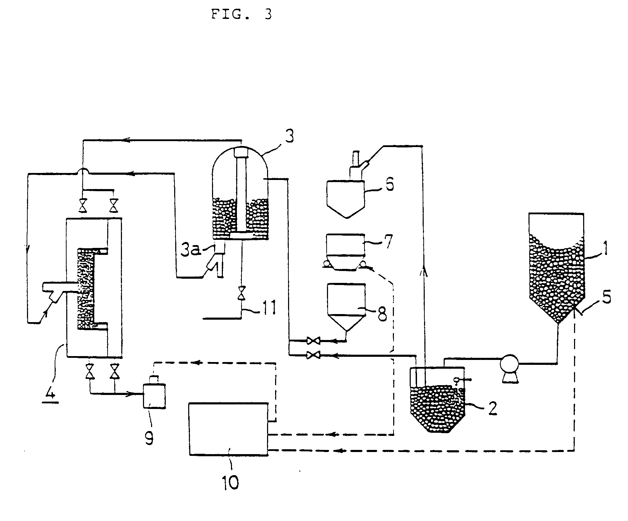

Fig. 3. shows an example of an apparatus used for practicing the process of the present invention, wherein, (1) is a silo for raw materials, (2) is a subhopper, (3) is a compressive filling container, and (4) is a metal mold consisting of a pair of female- and male-parts. The apparatus for producing foamed articles of the present invention is basically comprised of these elements. The pre-expanded beads to be compressed are transmitted from the silo for raw materials (1) through the subhopper (2) to the compressive filling container (3) to be stored therein, and then compressivly filled into the metal mold (4) through a charging part (3a) by conventionally known supplying means to be subjected to compression molding. The apparatus, shown in the drawing, is provided with a device for measuring the temperature and the apparent density of the pre-expanded beads to be compressed before starting of the compressive filling step, a pressure escape valve (9) which maintains the compressive filling pressure in the compressive filling container and the metal mold connected therewith at a constant level corresponding to the measured value and a computing and pressure controlling device (10) which calculate and automatically set a checking pressure value at the pressure escape valve (9).

The device (5) is a temperature sensor for measuring the temperature of the pre-expanded beads to be compressed and is attached to the silo (1), but it may be, of course, attached to the subhopper (2).

The devices (6), (7), (8) are provided for measuring apparent density of the pre-expanded beads to be compressed, wherein (6) is a definite volume sampler, (7) is a weighing machine, and (8) is a receiver. The pre-expanded beads thus measured by these devices are joined with the pre-expanded beads supplied to the compressive filling container (3) from the subhopper (2).

In the drawing (11) is a steam supplying line by which steam is supplied passing upward through the compressive filling container (3) to the male- and female-parts of the metal mold (4). The compressing pressure in the metal mold is maintained at the checking pressure set at the pressure escape valve (9). The experimental examples will be described below.

EXPERIMENT 1

In a thermostatic laboratory controllable at -15°C to 60°C, 1800 cc of pre-expanded beads of a ethylenepropylene random copolymer which has been thermostatically controlled is charged into a graduated pressure glass vessel of 2000 cc in volume and compressed with compressed air to maintain a constant volume, whereby the compressing pressure was determined corresponding to the temperature to obtain the results as shown in Table 1.

The results are plotted in Fig. 1, wherein the plots forms a straight line within the observed temperature range.

Table 1 : Temperature and Compressing Pressure

Test conditions:

1) Pre-expanded beads used: pre-expanded beads of a ethylene-propylene random copolymer

2) Apparent density of the pre-expanded beads (apparent expansion degree):

(1) 26.5 g/ℓ (34.0 times)

(2) 45.5 g/ℓ (19.8 times)

3) Temperature of the pre-expanded beads when compressed: -10 to 50℃

4) Constant volume at which 1800 cc of pre-expanded beads are compressed: being determined as below.

In the case of the pre-expanded beads (1):

1024 cc to give an apparent expansion degree of 20 times

In the case of the pre-expanded beads (2):

1029 cc to give an apparent expansion degree of 13.5 times

Results observed

| Pre-expanded beads | Temperature of pre-expanded beads (℃) | Compressing pressure ($kg/cm^2$) |
|---|---|---|
| (1) | -10.2 | 2.35 |
| | - 1.3 | 2.25 |
| | 8.5 | 2.05 |
| | 19.2 | 1.90 |
| (2) | -10.1 | 3.65 |
| | 0.8 | 3.30 |

| | | |
|---|---|---|
| | 9.7 | 3.25 |
| | 18.6 | 2.95 |
| (1) | 30.1 | 1.75 |
| | 38.0 | 1.70 |
| | 53.4 | 1.60 |
| (2) | 32.5 | 2.70 |
| | 40.1 | 2.45 |
| | 56.3 | 2.10 |

Each 1800 cc of the above pre-expanded beads having different apparent densities a definite temperature was placed in a pressure glass vessel of 2000 cc in volume, and compressed with compressed air to reach a specified apparent density. A compressing pressure corresponding to the apparent density was determined to obtain the results as shown in Table 2. The results are plotted in Fig. 2 which forms a straigh line within the observed range of apparent density.

Table 2: Apparent Density and Compressing Pressure

Tested conditions:

1) Pre-expanded beads used: Pre-expanded beads of a ethylene-propylene random copolymer

2) Apparent density of the pre-expanded beads (apparent expansion degree):

(1) 24.2 g/ℓ (37.2 times)

(2) 27.4 g/ℓ (32.8 times)

(3) 30.1 g/ℓ (29.9 times)

(4) 33.9 g/ℓ (26.5 times)

3) Temperature of the pre-expanded beads when compressed: 14.8℃

4) Volume at which 1800 cc of the pre-expanded beads is compressed to reach a definite apparent density:

In the case of the pre-expanded beads of (1):

968 cc to give an apparent expansion degree of 20 times

In the case of the pre-expanded beads of (2):

1096 cc to give the same apparent expansion degree as above.

In the case of the pre-expanded beads of (3):

1204 cc to give the same apparent expansion degree as above.

In the case of the pre-expanded beads of (4):

1356 cc to give the same apparent expansion degree as above.

Results observed

| Pre-expanded beads | Apparent density of pre-expanded beads (g/ℓ) | Compressing pressure ($kg/cm^2$) |
|---|---|---|
| (1) | 24.2 | 2.20 |
| (2) | 27.4 | 2.06 |
| (3) | 30.1 | 1.95 |

| | | |
|---|---|---|
| (4) | 33.9 | 1.80 |

It was observed that the compressing pressure is varied corresponding to the number of times of compressing and the above listed values are those observed after three times repetition of the compression. However, a linear relation was also observed with the values firstly observed.

From the results of Table 1 and Table 2, it is recognized that, if the temperature and the apparent density of the pre-expanded beads are measured, the compressing pressure in the compressive filling step can be determined to reach a specified apparent density.

EXPERIMENT 2

Using the apparatus as shown in Fig. 3, a square bar of 20 times in expansion degree was prepared by a compressing filling process.

The pre-expanded beads were those of a ethylenepropylene random copolymer having a base resin density of 0.9 g/cc, and the apparent density (apparent expansion degree) thereof was varied from 24.5 g/ ℓ (36.7 times) to 28.5 g/ ℓ (31.6 times).

The metal mold for the square bar in the experiment had the dimension (shape and volume of the part to be filled) of a square body of 1000 mm in length, 160 mm in each width and depth, and 25.6 ℓ in volume.

When the standard of expansion degree of this square bar product is assumed as 20 ± 2 times, the qualified standard of the weight of the product in the dried state after molding is given as below, by calculating from the following equation:

$$\frac{\text{Volume of product}}{\text{Weight of product}} \times 0.9 \text{ (density of base resin)} = \text{expansion degree of product}$$

Standard of product's weight (20 ± 2 times) = 1047 (minimum) -1152(central) -1280 (maximum)

When the standard is 20 ± 1,

Standard of product's weight (20 ± 1 times) = 1097 (minimum) -1152(central) -1213 (maximum)

The results obtained under various conditions are given in Table 3.

Table 3: Evaluation of the compressive filling process

| Example No. | Comparison | 2-1 | 2-2 |
|---|---|---|---|
| Evaluation | Conventional molding under constant con - trol pressure | Pressure control by temperature | Constant beads temperature, constant control pressure |
| Change in temperature | Max: 19.5 ℃<br>Min: 10.8 ℃<br>Difference: 8.7 ℃ | Max: 21.6 ℃<br>Min: 9.7 ℃<br>Difference:10.9 ℃ | 23 ℃ |

| | | | |
|---|---|---|---|
| Molded products (number) | 305 | 312 | 318 |
| Average weight (g) | 1162.2 | 1150.5 | 1166.3 |
| Maximum weight (g) | 1474.2 | 1254.5 | 1256.7 |
| Minimum weight (g) | 994.9 | 1111.0 | 1109.9 |
| Max. -Min. | 479.3 | 143.5 | 146.8 |
| Standard deviation (g) | 72.40 | 21.98 | 23.56 |
| Product yield(%) (20 ±2 times) | 93.5 | 100 | 100 |
| Product yield(%) (20 ±1 times) | 62.3 | 95.2 | 93.6 |

| Example No. | 2-3 | 2-4 |
|---|---|---|
| Evaluation | Pressure control by apparent density | Pressure control by temperature & apparent density |
| Change in temperature | Max: 20.5℃<br>Min: 11.2℃<br>Difference: 9.3℃ | Max: 23.8 ℃<br>Min: 14.5 ℃<br>Difference:9.3℃ |

| | | |
|---|---|---|
| Molded products (number) | 298 | 346 |
| Average weight (g) | 1145.4 | 1158.1 |
| Maximum weight (g) | 1385.4 | 1240.8 |
| Minimum weight (g) | 1005.2 | 1116.7 |
| Max.- Min. | 380.2 | 124.1 |
| Standard deviation (g) | 58.03 | 19.71 |
| Product yield(%) (20 ± 2 times) | 97.2 | 100 |
| Product yield(%) (20 ± 1 times) | 83.7 | 98.1 |

The values shown in Tab. 3 are the results obtained by a whole day operation (24 hrs.). Except for the Example 2-2, the pre-expanded beads used in the experiments received the effects by the atmospheric temperature of molding plant. As shown in Table 3, the experiments of the present invention gave results apparently superior to those of the Comparison which was conventionally practiced.

From the results of the Comparison, it is adequate to define the product standard as 20 ± 2 times. However, the Examples 2-1 and 2-4, gave product yields of more than 95 %, even if the product standard was changed to 20 ± 1 times. These yields being acceptable for the practical production.

As described above, the present invention provides a process of production of foamed articles of olefin resins which comprises measuring the temperature or the apparent density of the pre-expanded beads to be compressively filled before starting said compressive filling, determining the compressing pressure adapted to the observed temperature or the apparent density, and controlling the weight of the pre-expanded beads filled into a metal mold at a constant level to give foamed articles. Hitherto, the conventional processes include the defect that the foamed articles had a wide variation of properties thereof since the weight of the pre-expanded beads to be filled into the metal mold is not always kept constant due to variation of the temperature or the apparent density of the pre-expanded beads to be compressive filled into the mold, even if the compressing pressure is set at a specified value. However, according to the present invention, the above mentioned variation of the properties can be significantly decreased by measuring the temperature or the apparent density of the pre-expanded beads to be compressed before starting of the compressive filling step thereby determining the compression pressure adapted to the measured value. Consequently, foamed articles of decreased variation in the expansion degree and weight of the product can be produced. Thus, the present invention provides significantly improvement of quality and yield of the product.

The objects of the present invention are solved by the processes according to claims 1 and 2 and by the apparatus according to claim 3.

The invention as defined in claim 2 provides similar effects as above by maitaining the temperature of the pre-expanded beads at a constant level to keep the compressing pressure at a pressure adapted thereto.

The apparatus as defined in claim 3 is adapted to practicing said process industrially and is capable of advantageously producing foamed articles according to the above described process.

## Claims

1. A process of producing foamed articles of olefin resins which comprises compressively filling pre-expanded beads of said olefin resins in a metal mold (4) and subjecting to an expansion molding, wherein the temperature and/or the apparent density of said pre-expanded beads is measured before starting the compressive filling step and the compressing pressure is adapted to said temperature and/or apparent density and is determined to produce foamed articles having decreased variation in weight.

2. The process according to claim 1 wherein the temperature of said pre-expanded beads is preliminarily maintained at a constant level to produce foamed articles having decreased variation in weight.

3. An apparatus for the production of foamed articles of olefin resins comprising a silo (1) for raw materials, a subhopper (2), a compressive filling container (3) and a metal mold (4) wherein pre-expanded beads to be compressed are transmitted from said silo (1) through said subhopper (2) and filled into said metal mold (4) to be subjected to an expansion molding, wherein said apparatus comprises

   a) a bypass line arranged between said subhopper (2) and the compressive filling container (3),
   b) a temperature sensor (5) attached to said silo (1) or subhopper (2) and/or a device (6), (7), (8) for measuring the apparent density arranged in said bypass line,
   c) a pressure escape valve (9) attached to said metal mold (4) for maintaining the compressing pressure in said compressive filling container (3) and said metal mold (4) connected thereto at a constant level, and
   d) a computing and controlling device (10) to calculate and automatically define a checking pressure value of said pressure escape valve (9) based on information of said temperature sensor (5) and/or information of said device (6), (7), (8) for measuring apparent density.

## Patentansprüche

1. Verfahren zur Herstellung von geschäumten Werkstücken aus Olefinharzen mit den Schritten: unter Druck erfolgendes Einfüllen von Vorschaumperlen aus den Olefinharzen in eine Metallform (4) und Schäumen, wobei die Temperatur und/oder die Schüttdichte der Vorschaumperlen vor Beginn des Kompressionsfüllschrittes gemessen wird und der Kompressionsdruck an die Temperatur und/oder die Schüttdichte angepaßt wird und so bestimmt wird, daß geschäumte Werkstücke mit einer verringerten Gewichtsabweichung entstehen.

2. Verfahren nach Anspruch 1, wobei die Temperatur der Vorschaumperlen vorläufig auf einem konstanten Niveau gehalten wird, so daß geschäumte Werkstücke mit verringerter Gewichtsschwankung entstehen.

3. Vorrichtung zur Herstellung von geschäumten Werkstücken aus Olefinharzen mit einem Silo (1) für Rohmaterialien, einem Fülltrichter (2), einem Kompressionsfüllbehälter (3) und einer Metallform (4), wobei die zu komprimierenden Vorschaumperlen aus dem Silo (1) durch den Fülltrichter (2) befördert und in die Metallform (4) eingefüllt werden, um geschäumt zu werden,
   wobei die Vorrichtung aufweist:

   a) eine Umgehungsleitung, die zwischen dem Fülltrichter (2) und dem Kompressionsfüllbehälter (3) angeordnet ist,
   b) einen Temperatursensor (5), der an dem Silo (1) oder dem Fülltrichter (2) angeordnet ist, und/oder eine Vorrichtung (6), (7), (8) zum Messen der Schüttdichte, die in der Umgehungsleitung angeordnet ist,
   c) ein Druckablaßventil (9), das an der Metallform (4) befestigt ist, zum Halten des Kompressionsdruckes in dem Kompressionsfüllbehälter (3) und in der mit diesem verbundenen Metallform (4) auf einem konstanten Niveau, und
   d) eine Berechnungs- und Steuervorrichtung (10), um auf der Grundlage von Informationen des Temperatursensors (5) und/oder von Informationen der Vorrichtung (6), (7), (8) zum Messen der Schüttdichte einen Druckregulierwert des Druckablaßventils (9) zu berechnen und automatisch zu definieren.

## Revendications

1. Procédé de fabrication de produits cellulaires en résines oléfiniques qui comprend le remplissage sous compression d'un moule métallique (4) au moyen de perles pré-expansées préparées avec lesdites résines oléfiniques et la réalisation d'un formage par expansion, dans lequel la température et/ou la densité apparente desdites perles pré-expansées est mesurée avant le début de l'étape de remplissage par compression et la pression de compression est adaptée à ladite température et/ou densité apparente et définie pour fabriquer des produits cellulaires de poids moins variable.

2. Procédé selon la revendication 1, dans lequel la température desdites perles pré-expansées est préalablement maintenue à un niveau constant pour fabriquer des produits cellulaires de poids moins variable.

3. Appareil pour fabriquer des produits cellulaires en résines oléfiniques comprenant une trémie (1) à matières premières, une sous-trémie (2), un récipient de remplissage par compression (3) et un moule métallique (4), dans lequel les perles pré-expansées à comprimer passent de ladite trémie (1) dans ladite sous-trémie (2), puis sont injectées dans ledit moule métallique (4) pour y être soumises à un formage par expansion, ledit appareil comprenant a) une conduite de dérivation disposée entre ladite sous-trémie (2) et le récipient de remplissage sous compression (3), b) une sonde thermométrique (5) fixée à ladite trémie (1) ou sous-trémie (2) et/ou un dispositif (6), (7), (8) destiné à mesurer la densité apparente et disposé dans ladite conduite de dérivation, c) une soupape de surpression (9) fixée audit moule métallique (4) pour maintenir la pression de compression à un niveau constant dans ledit récipient de remplissage sous compression (3) et ledit moule métallique (4) communiquant avec celui-ci, et d) un dispositif de calcul et de réglage (10) pour calculer et définir automatiquement une valeur de réglage pour la pression dans ladite soupape de surpression (9) à partir des informations provenant de ladite sonde thermométrique (5) et/ou des informations provenant dudit dispositif (6), (7), (8) de mesure de la densité apparente.

FIG. 1

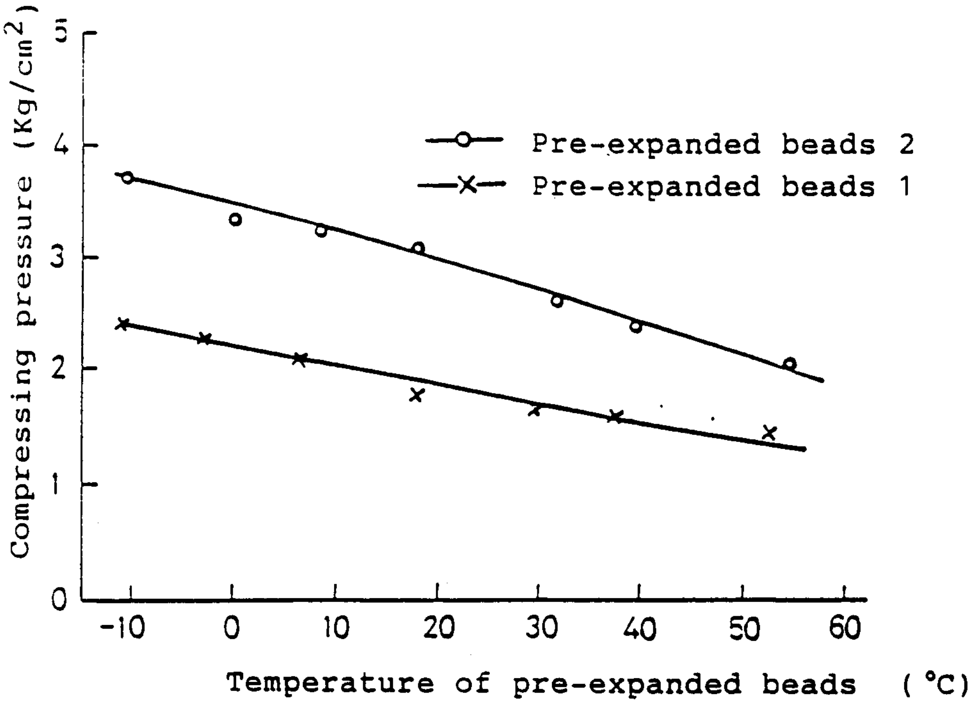
Compressing pressure (Kg/cm2)
0
1
2
3
4
5
Pre-expanded beads 2
Pre-expanded beads 1
-10
0
10
20
30
40
50
60
Temperature of pre-expanded beads (°C)

FIG. 2

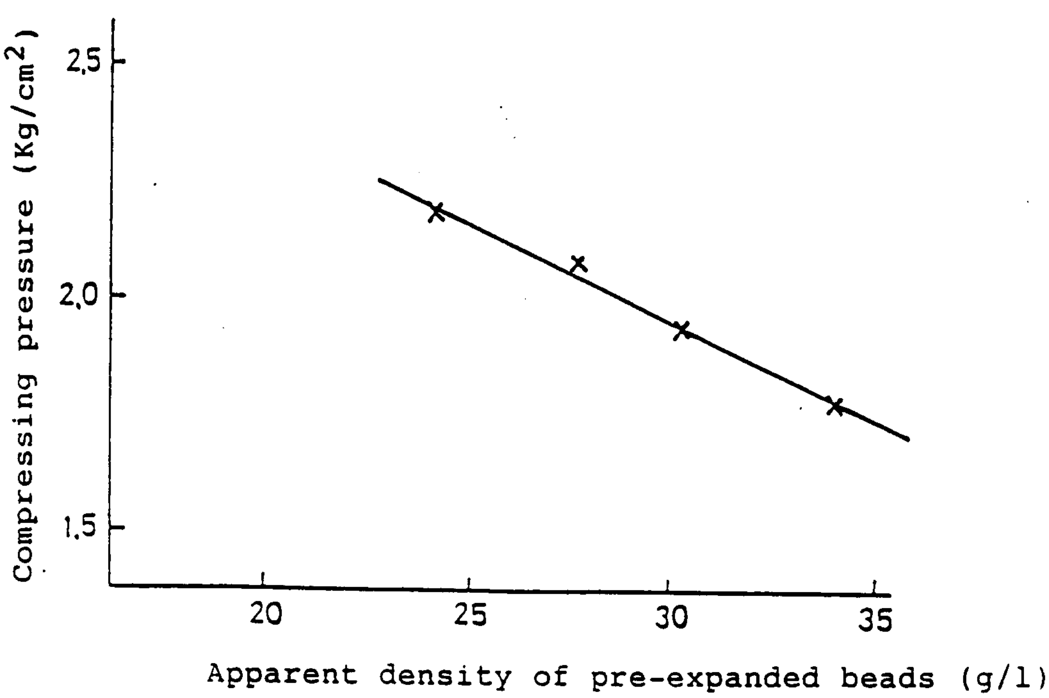
Compressing pressure (Kg/cm2)
2,5
2,0
1,5
20
25
30
35
Apparent density of pre-expanded beads (g/l)

FIG. 3